# EUROPÄISCHE PATENTSCHRIFT

(11) **EP 1 996 422 B1**
(45) Veröffentlichungstag und Bekanntmachung des Hinweises auf die Patenterteilung: **04.09.2013**
(21) Anmeldenummer: 07721935.0
(22) Anmeldetag: 20.02.2007
(51) Int. Cl.: B60J 7/14

(54) **CABRIOLET-FAHRZEUG MIT ZUMINDEST ZWEI STARREN DACHTEILEN**
CABRIOLET WITH AT LEAST TWO RIGID ROOF PARTS
VÉHICULE DE TYPE CABRIOLET COMPORTANT AU MOINS DEUX PARTIES DE TOIT RIGIDES

(30) Priorität: 07.03.2006 DE 102006010395
(43) Veröffentlichungstag der Anmeldung: 03.12.2008
(73) Patentinhaber: Valmet Automotive Oy, 23500 Uusikaupunki (FI)
(72) Erfinder: THEUERKAUF, Jürgen, 49565 Bramsche (DE)
(74) Vertreter: Kronthaler, Schmidt & Coll.
(86) Internationale Anmeldenummer: PCT/DE2007/000318
(87) Internationale Veröffentlichungsnummer: WO 2007/101422

(56) Entgegenhaltungen:
- EP-A1- 1 331 122
- EP-A1- 1 359 039
- WO-A-03/024731
- WO-A-2004/041571
- WO-A-2005/047037
- WO-A-2005/105499
- WO-A-2005/120875
- DE-B3- 10 351 062
- FR-A- 2 856 345

## Beschreibung

Die Erfindung betrifft ein Cabriolet-Fahrzeug mit zumindest zwei in geschlossener Dachstellung aufeinander folgenden Dachteilen nach dem Oberbegriff des Anspruchs 1-

Es ist bekannt, die Öffnung derartiger Dächer in mehreren Bewegungsphasen stattfinden zu lassen.

Die DE 102 17 917 Al zeigt ein dreiteiliges Dach, das in einer ersten Bewegungsphase aus der geschlossenen Stellung in eine über die Vertikale hinausgeschwenkte Zwischenstellung aufgestellt und gleichzeitig ineinander geschachtelt wird, während das so entstandene Paket von ineinander geschachtelten Dachteilen in einer zweiten Bewegungsphase gegensinnig zur ersten Bewegungsphase abwärts und heckwärts verschwenkt wird. Eine solche Bewegung bedingt eine relativ lange Öffnungszeit und eine aufwendige Kinematik.

Die DE 196 42 152 A1 zeigt ein ebenfalls dreiteiliges Dach, das in einer ersten Bewegungsphase aus der geschlossen Stellung in eine aufgeschwenkte Zwischenstel-lung ohne Relativbewegung der Dachteile zueinander aufschwenkt. Erst dann findet zunächst bei Stillstand des hinteren Dachteils eine Schachtelung der Dachteile ineinander statt, wobei hierfür zuerst ein im das Dach haltenden Gestänge angeordnetes Antriebsorgan einfährt und in der weiteren Bewegung wieder ausfährt. Auch eine solche Bewegung bedingt eine relativ lange Öffnungszeit und eine aufwendige Kinematik, wobei hier noch ein zusätzliches Antriebsorgan in das Gestänge eingearbeitet sein muss.

Die gattungsbildende WO 2005/047037 A1 offenbart ein Cabriolet-Fahrzeug mit drei in geschlossener Dachposition hintereinander angeordneten Dachteilen. Bei einer Dachöffnung werden ein vorderes Dachteil und ein mittleres Dachteil unter ein hinteres Dachteil geschachtelt. Das hintere Dachteil ist einerseits über eine Tragstruktur eines Heckdeckel und andererseits über einen Stützlenker karosseriefest gelagert und über eine Antrieb zwischen einer Position bei offenen Dach und einer Position bei geschlossenem Dach verlagerbar.

Der Erfindung liegt das Problem zugrunde, eine Vereinfachung und Beschleunigung des Dachöffnens oder -schließens bei Cabriolet-Fahrzeugen mit mehreren, voneinander getrennten Dachteilen zu erreichen.

Die Erfindung löst dieses Problem durch ein Cabriolet-Fahrzeug mit den Merkmalen des Anspruchs 1. Hinsichtlich vorteilhafter Ausgestaltungen der Erfindung wird auf die weiteren Ansprüche 2 bis 7 verwiesen.

Dadurch, dass das Dach gegenüber der Fahrzeugkarosserie über zwei hintereinander an der Fahrzeugkarosserie angeordnete starre Schwenkhebel beweglich ist, ist eine besonders einfache Anbindung geschaffen; zusätzliche Antriebsorgane neben dem Hauptantrieb sind entbehrlich.

Dadurch, dass während der Bewegung zwischen der geschlossenen und der geöffneten Dachstellung das Gestänge in einer durchgehend gleichsinnigen Bewegung bewegbar ist, sind Stillstandphasen der Dachbewegung oder Schubumkehrphasen von Antriebsorganen vermieden. Die Dachbewegung kann dadurch schnell ablaufen. Zudem kann eine einfache Kinematik vorgesehen sein.

Sofern während der gesamten öffnungsbewegung das hintere Dachteil mit einer Heckwärtskomponente bewegbar ist und dabei die Dachteile ineinander schachtelbar sind, kann die gesamte Bewegungszeit optimal ausgenutzt werden. Die Relativbewegung kann rein mechanisch so mit der Gesamtbewegung des Daches synchronisiert sein, dass keine Bewegung der anderen voreilt und diese verzögert werden müsste.

Eine vorteilhafte Kopplung beider Schwenkhebel untereinander sichert die Synchronität der Heckwärts- und Abwärtsverlagerung des Daches einerseits und der Schachtelung der Dachteile ineinander andererseits.

Wenn günstig einer der Schwenkhebel am hinteren Dachteil und der andere an einem das hintere mit einem vorgeordneten Dachteil verbindenden Gestängeteil angreift, können durch die Bewegung der beiden Schwenkhebel sowohl die Gesamtbewegung des Daches als auch die Relativbewegung der Dachteile untereinander bewirkt werden.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt :
- Fig. 1: eine schematische Seitenansicht des Daches eines erfindungsgemäßen Cabriolet-Fahrzeugs in geschlossener Dachstellung mit angedeuteten und teilweise abgebrochenen Fahrzeugkonturen,

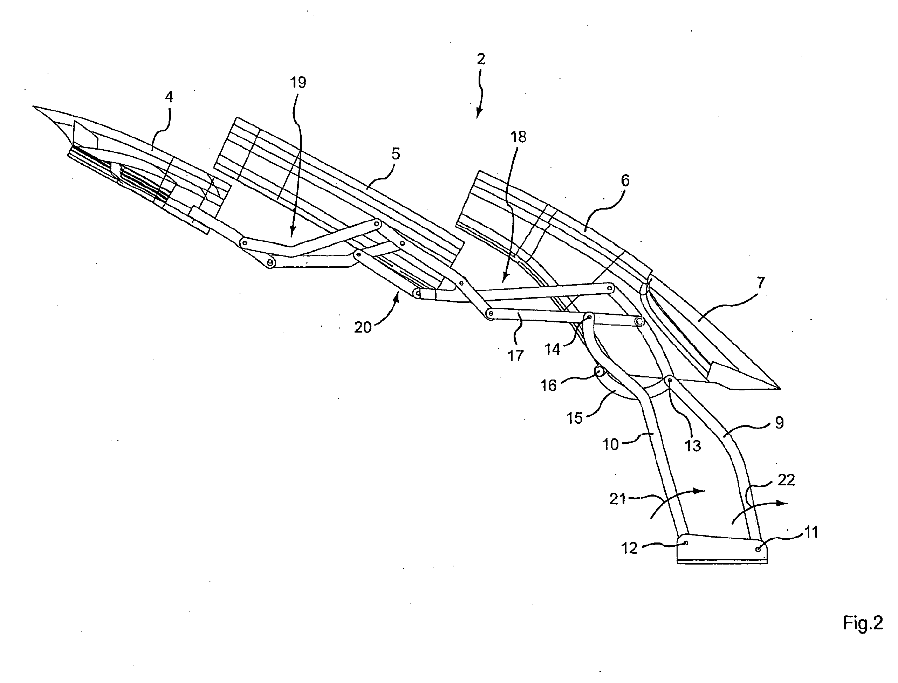

- Fig. 2: das Fahrzeugdach nach 1 während der beginnenden Gesamtöffnung und Schachtelung der Dachteile,

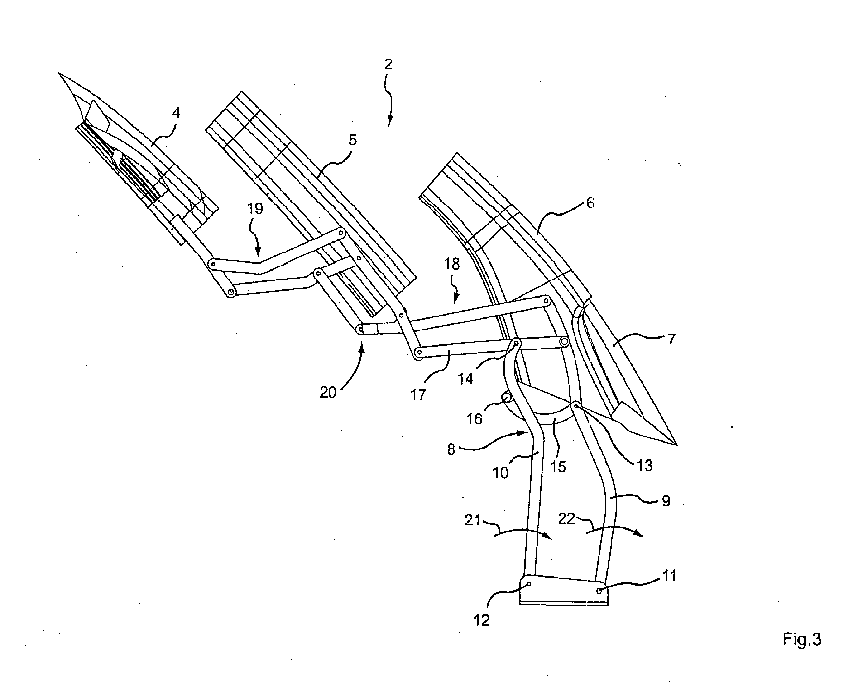

- Fig. 3: eine ähnliche Ansicht wie Fig. 2 während der weiter fortschreitenden Dachöffnung,

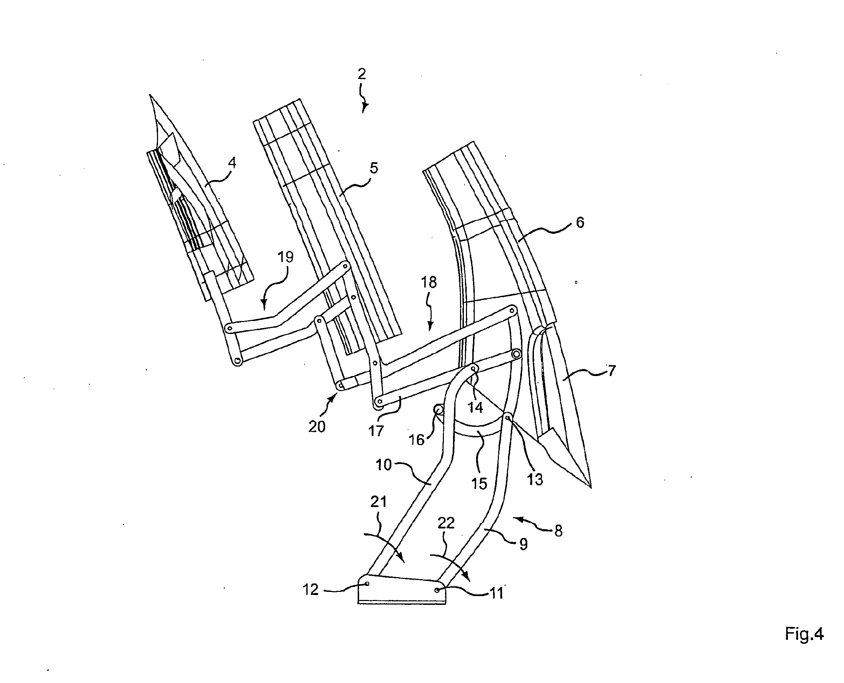

- Fig. 4: eine ähnliche Ansicht wie Fig. 3 während der weiter fortschreitenden Dachöffnung,

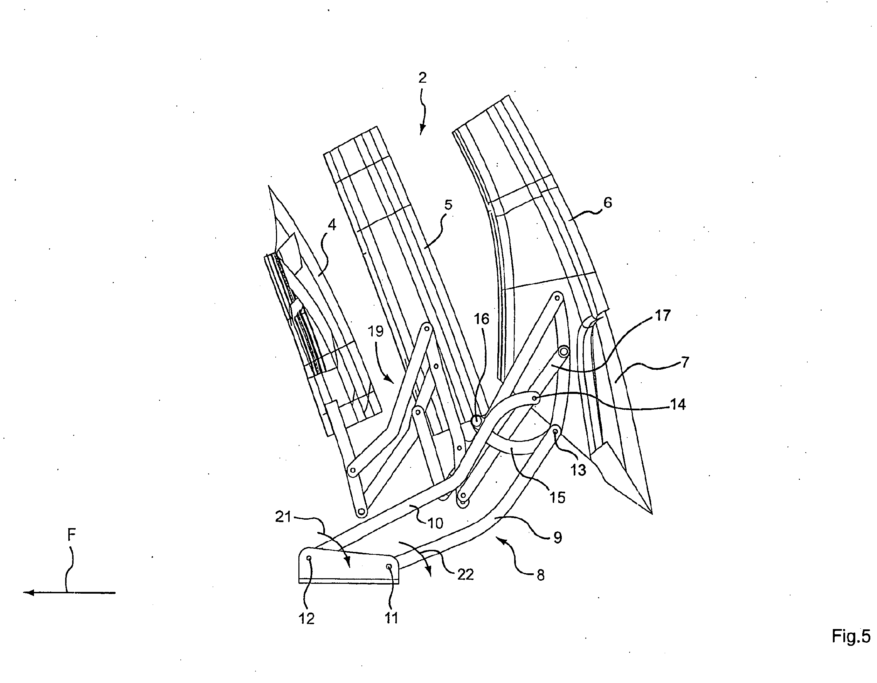

- Fig. 5: eine ähnliche Ansicht wie Fig. 4 während der weiter fortschreitenden Dachöffnung,

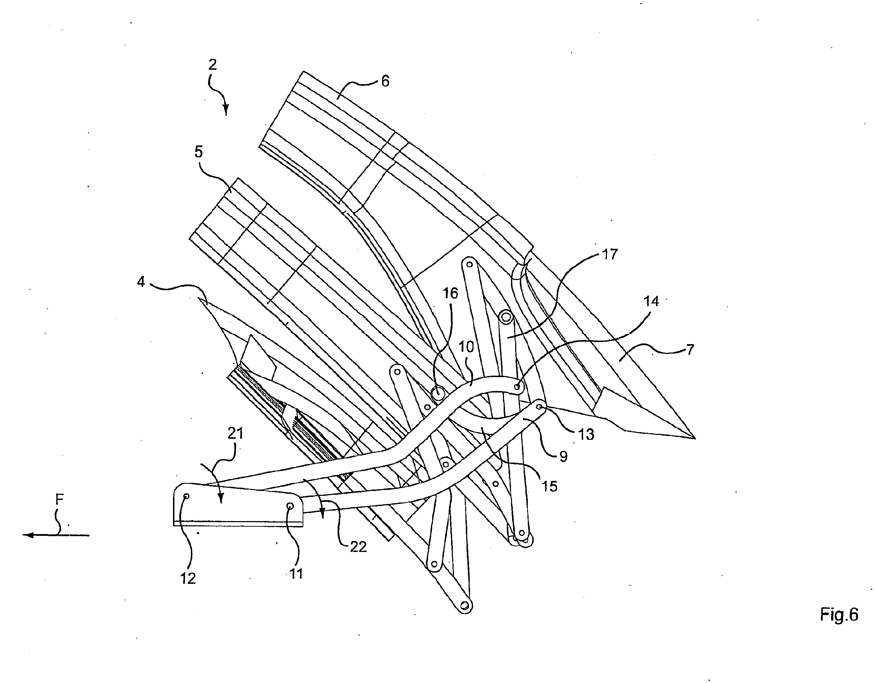

- Fig. 6: eine ähnliche Ansicht wie Fig. 5 in der Endphase der Dachöffnung,
- Fig. 7: eine ähnliche Ansicht wie Fig. 6 bei vollständig geöffnetem Dach.

Das in der Zeichnungsfigur 1 nur schematisch angedeutete Cabriolet-Fahrzeug.1 umfasst ein bewegliches Dach 2, das in seinem geöffneten Zustand im heckwärtigen Bereich der Fahrzeugkarosserie 3 ablegbar ist.

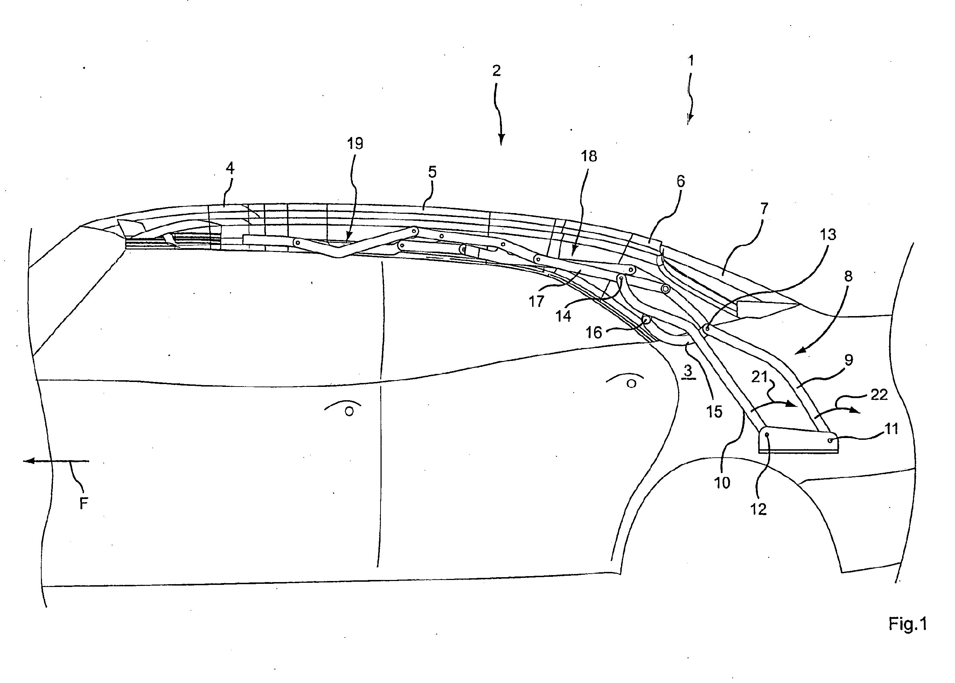

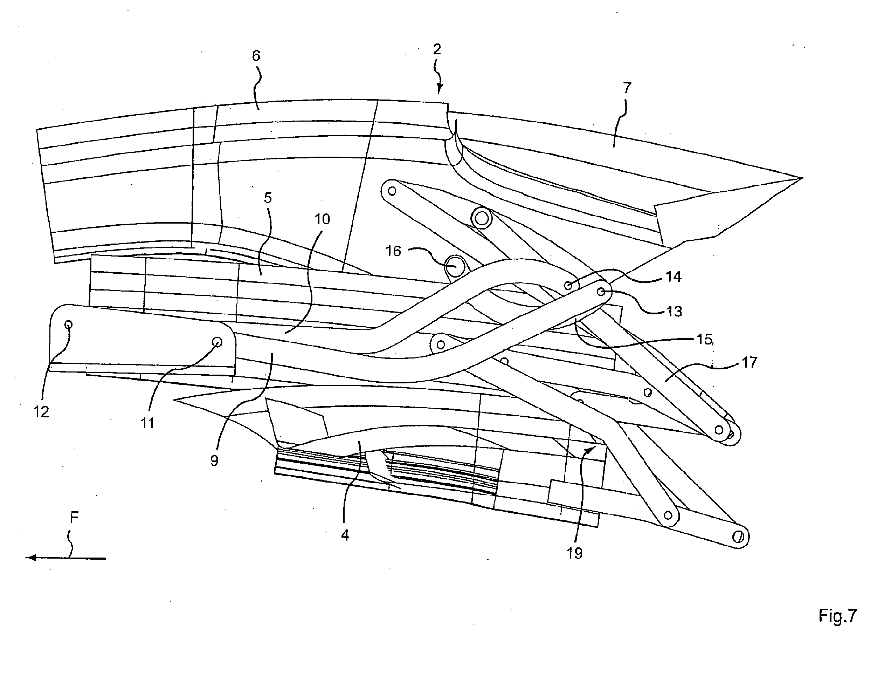

Das Dach 2 umfasst mehrere - hier drei - aufeinander folgende und jeweils in sich starre Dachteile 4, 5, 6. Diese folgen bei geschlossenem Dach 2 bezüglich der Fahrzeuglängsrichtung aufeinander (Fig. 1). Bei geöffnetem Dach 2 hingegen liegen die Dachteile 4, 5, 6 ineinander geschachtelt (Fig. 7), wobei das hinterste Dachteil 6 zuoberst liegt und dabei mit seiner Außenfläche nach oben weist. In das hinterste Dachteil 6 ist eine Heckscheibe 7 starr eingebunden. Die Dachteile 4, 5, 6 können anstelle einer komplett starren Ausbildung auch beispielsweise jeweils starre und zum Beispiel formstabil bezogene Rahmen umfassen. Auch die Anzahl der Dachteile kann an die jeweiligen Erfordernisse angepasst sein.

Das in der Zeichnung dargestellte Dach 2 hat eine relativ lange Ausbildung und ist zum Beispiel auch geeignet, den Innenraum eines Kombi-, Van- oder Geländefahrzeugs mit zwei oder mehr Sitzreihen hintereinander zu überdecken.

Das hinterste Dachteil 6 ist an der Fahrzeugkarosserie 3 über ein Gestänge 8 beweglich angebunden. Dieses umfasst zwei bezüglich der Fahrzeuglängsrichtung hintereinander an der Fahrzeugkarosserie 3 beweglich angeordnete und in sich jeweils starre Schwenkhebel 9, 10, die synchron um karosseriefeste Hauptlager 11, 12 schwenkbar sind.

Jeder der Schwenkhebel 9, 10 beschreibt in Bewegung des Daches 2 mit seinem dem Lager 11, 12 abgewandten Ende ein Kreisbahnsegment um seine karosseriefeste Anlenkung 11, 12. Die Bewegungsrichtung bleibt während der gesamten Öffnungsbewegung bzw. während der gesamten Schließbewegung jeweils gleichsinnig.

Der hintere Schwenkhebel 9 greift mit seinem dem Lager 11 abgewandten Ende über ein Gelenk 13, dessen Achse parallel zum Lager 11 liegt, am hintersten Dachteil 6 an. Dort ist zudem eine Kopplung 15 gelagert, die beide Schwenkhebel 9, 10, beabstandet zu ihren Lagern 11, 12, miteinander verbindet und am vorderen Schwenkhebel 10 an einem Gelenk 16 angreift.

Der vordere Schwenkhebel 10 greift hingegen an einem das hintere Dachteil 6 mit einem vorgeordneten Dachteil 5 verbindenden Gestängeteil 17 im Gelenk 14 an. Das Gestängeteil 17 ist Teil eines Viergelenks 18 zwischen den Dachteilen 6 und 5. Auch die Dachteile 5 und 4 können beispielsweise über ein weiteres Viergelenk 19 verbunden sein, das über eine weitere Kopplung 20 zwangsweise mit dem Viergelenk 18 synchronisiert ist.

Durch die Kopplung 15 ist die Öffnungsbewegung des hintersten Dachteils 6 mit der Einschachtelung des Dachteils 5 unter dieses zwangssynchronisiert, durch die Kopplung 20 die Einschachtelung des vorderen Dachteils 4 unter das mittlere Dachteil 5.

Durch einen nicht eingezeichneten Hauptantrieb werden zur Dachöffnung die Schwenklenker 9, 10 um die Lager 11, 12 in Richtung der Pfeile 21, 22 durchgehend verschwenkt. Die Winkelgeschwindigkeit kann für einen flüssigen Bewegungsablauf während der gesamten Öffnungsbewegung gleichbleiben. In jedem Fall ist es eine durchgehend gleichsinnige Bewegung, die ohne Stillstands- oder Umkehrphasen erfolgt, wie auch die gesamte Dachbewegung.

Dabei wird über die Anbindung 13 das hintere Dachteil auf einem Kreisbahnsegment mit einer Komponente heckwärts verlagert. Über die Kopplung 15 wird gleichzeitig das Viergelenk 18 derart bewegt, dass das Dachteil 5 in einer zum Dachteil 6 nahezu parallelen Verlagerung gleichsinnig gewölbt unter dieses bewegt wird.

Die Heckwärtsbewegung des hinteren Dachteils 6 findet hier durchgehend über die gesamte Öffnungsbewegung des Daches 2 statt.

Auch die Synchronität, dass einerseits über die Schwenkhebel 9, 10 das hintere Dachteil 6 mit einer Heckwärtskomponente bewegbar ist, wobei über die Kopplungen 15, 20 die Dachteile 6, 5, 4 gleichzeitig ineinander schachtelbar sind, kann durchgehend während der gesamten Öffnungsbewegung stattfinden. Der für die jeweiligen Bewegungsabläufe bereitgestellte Zeitanteil der Öffnungszeit ist dadurch maximiert, die Öffnungszeit des Daches 2 ist minimiert. Gleiches gilt für die Schließbewegung des Daches 2.

## Patentansprüche

1. Cabriolet-Fahrzeug (1) mit zumindest zwei bei geschlossenem Dach (2) hintereinander folgenden und in sich formstabilen Dachteilen (4;5;6), die bei geöffnetem Dach (2) ineinander geschachtelt liegen, wobei ein hinteres, eine Heckscheibe (7) umfassendes Dachteil (6) an einer Fahrzeugkarosserie (3) über ein Gestänge (8) beweglich angebunden ist, bei geöffnetem Dach (2) zuoberst liegt und dabei mit seiner Außenfläche nach oben weist, wobei während der Bewegung zwischen der geschlossenen und der geöffneten Dachstellung das Gestänge (8) in einer durchgehend gleichsinnigen Bewegung bewegbar ist,
**dadurch gekennzeichnet,**
**dass** das Dach (2) gegenüber der Fahrzeugkarosserie (3) über zwei hintereinander an der Fahrzeugkarosserie angeordnete starre Schwenkhebel (9;10) beweglich ist.

2. Cabriolet-Fahrzeug (1) nach Anspruch 1,
**dadurch gekennzeichnet,**
**dass** während der gesamten Öffnungsbewegung das hintere Dachteil (6) mit einer Heckwärtskomponente bewegbar ist, wobei die Dachteile (6; 5, 4) ineinander schachtelbar sand.

3. Cabriolet-Fahrzeug (1) nach einem der Ansprüche 1 oder 2,
**dadurch gekennzeichnet,**
**dass** sowohl die Heckwärtsbewegung des hinteren Dachteils (6) als auch synchron eine Relativbewegung zum Schachteln der Dachteile (6, 5, 4) ineinander während der gesamten Öffnungsbewegung stattfindet.

4. Cabriolet-Fahrzeug (1) nach einem der Ansprüche 1 bis 3,
**dadurch gekennzeichnet,**
**dass** beide Schwenkhebel (9;10) über eine Kopplung (15) miteinander verbunden sind.

5. Cabriolet-Fahrzeug (1) nach einem der Ansprüche 1 bis 4,
**dadurch gekennzeichnet,**
**dass** einer der Schwenkhebel (9) am hinteren Dachteil (6) und der andere (10) an einem das hintere (6) mit einem vorgeordneten Dachteil (5) verbindenden Gestängeteil (17) angreift.

6. Cabriolet-Fahrzeug (1) nach Anspruch 5,
**dadurch gekennzeichnet,**
**dass** der am hinteren Dachteil (6) angreifende Schwenkhebel (9) mit seinem dort angreifenden Ende ein Kreisbahnsegment um seine karosseriefeste Anlenkung (11) beschreibt.

7. Cabriolet-Fahrzeug (1) nach einem der Ansprüche 3 bis 6,
**dadurch gekennzeichnet,**
**dass** drei Dachteile (4;5;6) vorgesehen sind, deren vorderen beiden (4;5) während der öffnungsbewegung ineinander und unter das hinterste Dachteile (6) schachteln.

## Claims

1. A convertible vehicle (1) which comprises at least two dimensionally stable roof parts (4; 5; 6), which are arranged in sequence when the roof (2) is closed and are nested into each other when the roof (2) is open, wherein a rear roof part (6) comprising a rear window (7) is movably connected to a vehicle body (3) via a linkage (8), is located uppermost when the roof (2) is open and has its external surface facing upwards, said linkage (8) being movable in a completely onedirectional motion during the movement between the closed and the opened roof positions, **characterised in that**
the roof (2) is movable with respect to the vehicle body (3) via two rigid pivot levers (9;10) arranged in sequence on the vehicle body.

2. The convertible vehicle (1) according to claim 1, **characterised in that**, during the entire opening movement, the rear roof part (6) can be moved with a rearward component and the roof parts (6; 5, 4) can be nested into each other.

3. The convertible vehicle (1) according to any one of claims 1 or 2, **characterised in that** both the rearward movement of the rear roof part (6) and, synchronously, a relative movement for nesting the roof parts (6; 5, 4) into each other take place throughout the entire opening movement.

4. The convertible vehicle (1) according to any one of claims 1 to 3, **characterised in that** both pivot levers (9; 10) are connected to each other via a coupling (15).

5. The convertible vehicle (1) according to any one of claims 1 to 4, **characterised in that** one of the pivot levers (9) engages the rear roof part (6) and the other pivot lever (10) engages a linkage element (17) which connects the rear roof part (6) with a preceding roof part (5).

6. The convertible vehicle (1) according to claim 5, **characterised in that** the end of the pivot lever (9) engaging the rear roof part (6) traces a circle segment around its body-mounted articulation (11).

7. The convertible vehicle (1) according to any one of claims 3 to 6, **characterised in that** three roof parts (4; 5; 6) are provided, of which the two front roof parts (4; 5) are nested into each other and under the rear roof part (6) during the opening movement.

## Revendications

1. Véhicule cabriolet (1) avec au moins deux éléments de toit (4; 5; 6) de forme stable, qui sont disposés consécutivement lorsque le toit (2) est fermé et sont imbriqués l'un dans l'autre lorsque le toit (2) est ouvert, un élément de toit arrière (6) étant relié de manière déplaçable à une carrosserie (3) au moyen d'une tringlerie (8), cet élément de toit arrière (6) comprenant une lunette arrière (7) et étant disposé tout en haut lorsque le toit (2) est ouvert et sa face extérieure étant tournée vers le haut, ladite tringlerie (8) étant déplaçable par un mouvement entièrement de même sens pendant le déplacement entre la position fermée et la position ouverte du toit, **caractérisé en ce que**
le toit (2) est déplaçable par rapport à la carrosserie (3) au moyen de deux leviers de pivotement (9;10) rigides qui sont disposés sur la carrosserie l'un derrière l'autre.

2. Véhicule cabriolet (1) selon la revendication 1, **caractérisé en ce que**, pendant tout le mouvement d'ouverture, l'élément de toit arrière (6) est déplaçable avec une composante orientée vers l'arrière et les éléments de toit (6; 5, 4) peuvent être imbriqués les uns dans les autres.

3. Véhicule cabriolet (1) selon l'une quelconque des revendications 1 ou 2, **caractérisé en ce que** le mouvement de l'élément de toit arrière (6) vers l'arrière et, en synchronicité, un mouvement relatif pour imbriquer les éléments de toit (6; 5, 4) les uns dans les autres s'effectuent tous les deux pendant tout le mouvement d'ouverture.

4. Véhicule cabriolet (1) selon l'une quelconque des revendications 1 à 3, **caractérisé en ce que** les deux leviers de pivotement (9; 10) sont reliés l'un à l'autre par un accouplement (15).

5. Véhicule cabriolet (1) selon l'une quelconque des revendications 1 à 4, **caractérisé en ce que** l'un des leviers de pivotement (9) attaque à l'élément de toit arrière (6) et l'autre levier de pivotement (10) attaque à un élément de tringlerie (17) reliant l'élément de toit arrière (6) à un élément de toit (5) disposé en amont.

6. Véhicule cabriolet (1) selon la revendication 5, **caractérisé en ce que** l'extrémité du levier de pivotement (9) attaquant à l'élément de toit arrière (6) trace un segment de cercle autour de son articulation (11) montée fixe sur la carrosserie.

7. Véhicule cabriolet (1) selon l'une quelconque des revendications 3 à 6, **caractérisé en ce que** l'on prévoit trois éléments de toit (4; 5; 6), dont les deux éléments de toit avant (4; 5) sont imbriqués l'un dans l'autre et au-dessous de l'élément de toit arrière (6) pendant le mouvement d'ouverture.
